# EUROPEAN PATENT APPLICATION

(11) **EP 4 091 458 A1**
(43) Date of publication of application: **23.11.2022**
(21) Application number: 21174496.6
(22) Date of filing: 18.05.2021
(51) Int. Cl.: A23L 5/30, C11B 1/04, C11B 1/06, A23N 1/00

(54) **METHOD AND SYSTEM FOR TREATING A VEGETABLE, FRUIT OR A PART THEREOF DURING A PROCESS OF PRODUCING AN OIL, IN PARTICULAR AN OIL FROM PALM OIL FRUITS**

(71) Applicant: Elea Service GmbH, 49610 Quakenbrück (DE); Alfa Laval Corporate AB, 221 00 Lund (SE)
(72) Inventor: TÖPFL, Stefan, 49610 Quakenbrück (DE); HONG, BoonKheng, 47650 Subang Jaya (MY); SARUP, Bent, 3480 Fredensborg (SE)
(74) Representative: Grünecker Patent- und Rechtsanwälte PartG mbB

(57) **Abstract**

The present invention relates to a method and a system (33) for treating a vegetable, fruit or a part thereof (1) during a process of producing an oil (2) from the vegetable, fruit or parts thereof (1), in particular of producing an oil (2) from palm oil fruits (3). In order to increases the oil yield and oil quality while improving the efficacy by reducing the time and energy consumption required for the oil production the method comprising the steps of: at least partially replacing a thermal processing step in the process of producing the oil (2) with a step of conditioning the vegetable, fruit or part thereof (1) by applying an electric field to the vegetable, fruit or part thereof (1); and pressing the conditioned vegetable, fruit or part thereof (1) for obtaining a press liquor (14) and a press cake (24). The inventive system (33) comprises a conditioner (34, 37) having a conditioning chamber (35) and at least one capacitor (36) for generating an electric field in said conditioning chamber (35); a sterilizer (5) for thermally deactivating oil-deteriorating enzymes having a sterilization chamber (50) and/or a digester (12) for thermally rupturing oil-bearing cells in the vegetable, fruit or part thereof having a mashing chamber (51); and at least one press (13) arranged downstream the conditioner (34, 37) for squeezing the conditioned vegetable, fruit or part thereof and obtaining a press liquor (14) and a press cake (24).

## Description

The present invention relates to a method for treating a vegetable, fruit or a part thereof during a process of producing an oil, in particular producing an oil from palm oil fruits, said method comprising the step of pressing the vegetable, fruit or part thereof for obtaining a press liquor and a press cake.

The present invention further relates to a system for the treatment of a vegetable, fruit or part thereof during the production of an oil from the vegetable, fruit or part thereof, in particular, the production of an oil from palm oil fruits, said system comprising a sterilizer for thermally deactivating oil-deteriorating enzymes having a sterilization chamber and/or a digester for thermally rupturing oil-bearing cells in the vegetable, fruit or part thereof having a mashing chamber; and at least one press for squeezing the vegetable, fruit or part thereof and obtaining a press liquor and a press cake.

The present invention further relates to units and sub-systems that are designed and configured to be used in the system of the present invention.

Vegetable oils are oils extracted from seeds or from other parts of fruits and vegetables. Soybean oil, grape seed oil and rice bran oil are examples of oils from seeds. Olive oil, avocado oil and palm oil are examples of oils from other parts of fruits.

Many vegetable oils are consumed directly, or indirectly as ingredients in food. The oils serve a number of purposes in this role, such as shortening to give pastry a crumbly texture, texture to make other ingredients stick together less, and flavor. Some oils, such as olive, sesame, or almond oil, are chosen specifically for the flavor they impart.

Oils can be used to cook foods. Such oils include the cooking oils soybean, rapeseed, canola, sunflower, safflower, peanut, cottonseed, as well as coconut, palm, and rice bran oils.

Palm oil is the edible oil produced in the highest amount, more than 70 mill ton / year, with about 90% of the production taking place in South East Asia, notably Indonesia and Malaysia. In addition, palm kernel oil, a lauric oil, is produced in about 8 mill ton/year. Palm and palm kernel oils are fundamental in the diet for billions of people, and also play a major role in the biofuel and oleochemical industries.

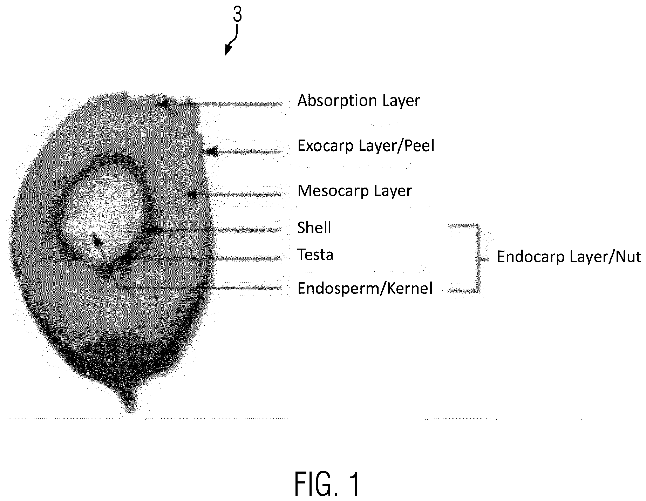

A cross section of palm oil fruit is shown in Fig. 1 (reference: Journal of the Taiwan Institute of Chemical Engineers, Volume 60, March 2016, Pages 582-587, "A comparative investigation on the effect of thermal treatments on the mechanical properties of oil palm fruitlet components" by M.Y.Harun, AziziChe Yunusade M.H. Shahlsmail, N. AzianMorad). The fruit holds oils of 2 types: in the mesocarp palm oil with dominating fatty acids of chain length 16 and 18, and palm kernel oil with dominating fatty acid chain length 12.

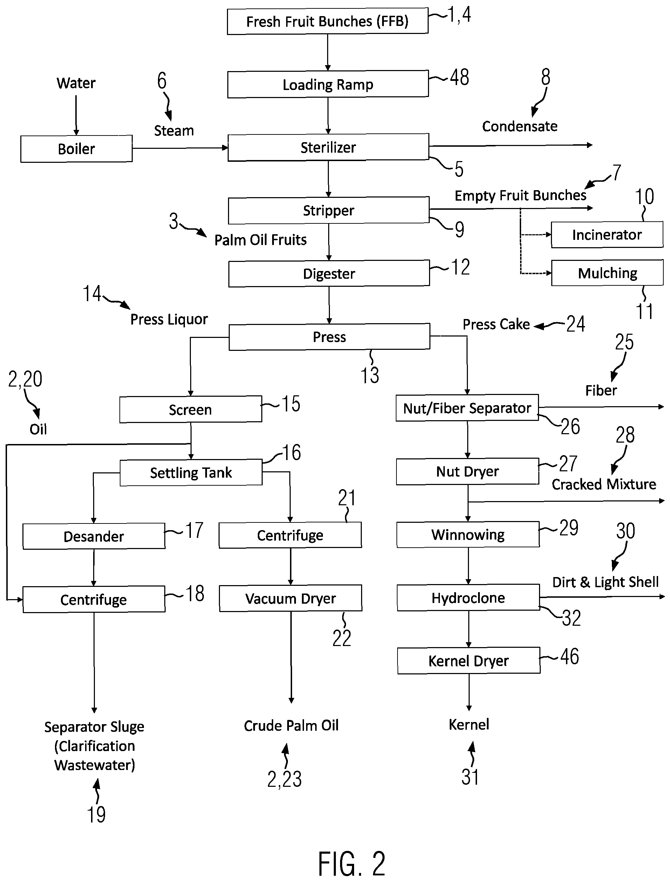

During palm oil production, the fibers present in the mesocarp need to be separated. An overview of the palm oil extraction process is given in Figure 2 (reference: Waste Management SUSTAINABLE UTILIZATION OF OIL PALM WASTES: OPPORTUNITIES AND CHALLENGES, May 2015, Project: Recycling of organic wastes in agriculture: appraisal of potential effect on plant growth and soil health', Authors: Asha Embrandiri, Shlrene, Quaik, Parveen Fatemeh Rupani, Vaibhav Srivastava, Pooja Singh) and will be described in more detail below.

There are considerable oil losses in the oil extraction process. Only about 92.5 % of the palm oil is extracted. Typical crude palm oil mill sizes are 30 or 60 ton/hour of fresh fruit bunches. If just 0.1 % additional oil could be extracted in a 60 ton/hour fresh fruit bunch mill, then at a crude palm oil price of 900 USD/ton, at 300 operating days/year at 20 hours per day, the annual revenue would increase by 324,000 USD/year. The highest loss occurs where oil containing fibers are separated from the fruit mesocarp.

Fresh fruit bunches are the harvested form for palm oil production. They are thermally treated in an autoclave/sterilizer at a pressure of 3 bars for up to 90 minutes to denature hydrolytic enzymes and prevent oil deterioration through mill processing. During the sterilization some oil is lost to the condensate and will deteriorate. A shortening of this sterilization time will both lead to steam savings and reduced oil losses.

Another problem of crude palm oil is its high content of free fatty acids, typically in the range of 4% to 5%, which is associated with the ripeness and handling of the fruits. Free fatty acids as well as partial glycerides (mono and diacylglycerides arising from the triacylglycerides being hydrolyzed to produce free fatty acids) act as emulsifiers that cause problems when separating the oil products from the liquid phase during extraction, and hence reduce the overall oil field. With such high free fatty acid content, the down-stream refining takes place by so-called physical refining, where free fatty acids are vacuum stripped from the oil to produce palm fatty acid distillate. However, lately there has been much focus on the formation of glycidyl esters in these high temperature operations of physical refining in free fatty acid-rich oils. Which is not the case for seed oils with free fatty acid contents in the range of 0.5% to 2%. Should it be possible to process palm oil fruits with a lower degree of ripeness and still retain a high oil yield this would be a significant advantage. Not only related to the issue of glycidyl formation, but also since more oil of higher quality would be extracted instead of deteriorating to partial mono- and diglycerides. Furthermore, with a free fatty acid content in the range of 2% the so-called chemical refining becomes feasible, where the oil is treated with caustic to remove the free fatty acids as soap. However, oil extraction from unripe fruits is associated with substantial oil losses. Chemical refining using high speed separators is in general known as leading to significantly improved palm oil quality, and is for example in use today (in spite of the high oil losses) to produce palm oil for use in milk formulations for infants or other infant food.

Yet another health issue in palm oil is the occurrence of 3-MonoChloroPropaneDiol (3-MCPD Esters), which is related to chloride content in the crude palm oil. Low levels of chlorides require careful fruit and mill management, including reducing as much as possible the chloride contamination coming in with dirt and sand attached to the fresh fruit bunches.

Thus, there is a need to lower the energy consumption and to reduce the thermal exposition in order to improve production of an oil having a better quality in a higher yield.

It is thus an object of the present invention to provide a method and system for treating a vegetable, fruit or part thereof, which improves the process of producing an oil from the vegetable, fruit or part thereof in that it increases the oil yield and the oil quality while improving the efficacy by reducing the time and energy consumption required for the oil production.

The present invention solves this problem by providing a method for treating a vegetable, fruit or part thereof during a process of producing an oil from the vegetable, fruit or part thereof, in particular, producing an oil from palm oil fruits, said method comprising the steps of at least partially replacing a thermal processing step in the process of producing the oil with a step of conditioning the vegetable, fruit or part thereof by applying an electric field to the vegetable, fruit or part thereof; and pressing the conditioned vegetable, fruit or part thereof for obtaining a press liquor and a press cake.

The system for the treatment of the vegetable, fruit or part thereof during the production of an oil from the vegetable, fruit or part thereof, in particular the production of an oil from palm oil fruits solves this problem by comprising a conditioner having a conditioning chamber and at least one capacitor for generating an electric field in said conditioning chamber; a sterilizer for thermally deactivating oil-deteriorating enzymes having a sterilization chamber and/or a digester for thermally mashing the vegetable, fruit or part thereof having a mashing chamber; and at least one press arranged downstream the conditioner for squeezing the conditioned vegetable, fruit or part thereof and obtaining a press liquor and a press cake.

The inventors found that applying an electric field to a vegetable, fruit or part thereof surprisingly overcomes the above-mentioned limitations and results not only in an increase in oil yield, but also surprisingly allows to reduce the residual time or even replace a thermal processing step that is usually performed when producing the vegetable oil.

The above solutions may further be improved by the following features that may be combined with one another independently. These embodiments and other aspects of the present invention, such as units and sub-systems configured for the system of the invention, are described in detail below.

According to one embodiment, the vegetable, fruit or part thereof is conditioned before or during the thermal processing step of deactivating oil-deteriorating enzymes and/or before or during the thermal processing step of thermally mashing the vegetable, fruit or part thereof. Thermally deactivating oil-deteriorating enzymes is performed as sterilization in the production of an oil from, for example, palm oil fruits. It was surprisingly found that conditioning, according to the present invention, i.e. application of an electric field, accelerates the deactivation of enzymes, thus reducing the required sterilization time and allowing energy savings. A similar effect was surprisingly found when the conditioning was done before or during the thermal mashing of the vegetable, fruit or part thereof, which is known, for example, as digestion in the production of an oil from palm oil fruits.

The benefits of the present invention are substantial. The inventive conditioning allows reducing the duration and/or energy and water consumption of the thermal processing step by more than 20%, more than 30%, more than 40%, more than 50%, more than 60%, more than 70%, more than 80% or more than 90%, compared to the regular thermal processing step performed in the state of the art. The inventive conditioning surprisingly allows to reduce the sterilization temperature and pressure, thus making sterilization at atmospheric pressure possible, which allows for a continuous sterilization process that improves the overall throughput and makes an overall continuous palm oil milling process possible. To date, sterilizing is mostly done in batches at a pressure of 3 bars. In one embodiment of the invention, the method comprises the further step of heating the conditioned vegetable, fruit or part thereof in a continuous heating process. The heating may be performed by subjecting the vegetables, fruits or parts thereof to steam or heated water at an atmospheric pressure of e.g. 60°C to 80°C.

The inventive conditioning thus may at least partially replace the steps of thermally deactivating oil-deteriorating enzymes and/or the step of thermally rupturing the oil-bearing cells resulting in a significant reduction of energy consumption required for the steam-based sterilization and digestion steps performed commonly in the state of the art. A replacement is achieved when the thermal energy consumption is reduced compared to a treatment without the inventive conditioning. The replacement and the resulting reduction in the required residence time spent for e.g. sterilization or digestion also makes the oil processing faster and more efficient.

According to one embodiment, a pulsed electric field (PEF) causing a cell disruption may be applied during the conditioning. PEF application is based on an effect termed electroporation resulting in pore formation in cell membranes. Thus, electroporation takes place, in which the semi-permeability of the cell membrane is removed by applying an electric field, in particular, a pulsed electric field. The semi-permeability of the cell membrane can be reversibly or irreversibly removed, whereby irreversible electroporation is preferred, because the permanent removal of semi-permeability allows for more flexibility in the sequence of the individual process steps performed in the production of oil. Depending on the circumstances, such as the material to be treated, the maturity of the treated vegetable or fruit, the processing conditions and the type of equipment used for separation, the reversible electroporation, which requires less energy, can be practical as well. The use of PEF has been suggested to increase extraction yield of sugar or juice from fruits and vegetable tissues, to accelerate drying of fruits as well as for microbial inactivation and shelf life extension of pumpable liquids. At present the process is mostly applied in water rich environments, e.g. in potato industry to improve cutting based on reduction of turgor pressure.

An energy input of at least at least 0,5 kJ/kg, preferably from 5 to 30 kJ/kg may be applied by the electric field to the vegetable, fruit or part thereof to be conditioned. Such field strength can be obtained by using commercially industrial capacitors, and provide the advantage of preventing unwanted thermal effects during the conditioning, which could lead to unwanted alterations of the processed sample, reducing the oil quality.

In one embodiment, the conditioning may at least partially replace the step of thermally deactivating oil-deteriorating enzymes. In this embodiment, a product value obtained by multiplying the energy input of conditioning in kJ/kg with the duration of the thermal deactivation in minutes may be in the range between 350 and 450. It was surprisingly found that there is a positive correlation between the increase in the reduction in sterilization time for thermally decomposing enzymes and higher specific energy inputs by the electric field. High energy inputs give more oil yield when the sterilization times are reduced.

It is shown that it is advantageous to have an electric field of 0.5 kV/cm to 3 kV/cm be applied. Such field strength can be obtained with commercially available capacitors even for large samples, such as fresh fruit bunches from palm trees, in order for an effective conditioning thereof, which allows to improve oil yield and at least partial replacement of the thermal processing step.

A high voltage pulse generator generating electric fields in the form of short pulses in the micro to millisecond range at a high voltage in the kilovolt range can preferably be used as the pulse generator. Marx generators can be used as high-voltage pulse generators.

In terms of time and energy optimization as well as with respect to improving oil yield, the vegetable, fruit or part thereof can be conditioned with at least electric pulses, preferably 10 to 200 electric pulses, more preferably 30 to 50 electric pulses.

The electric field, in particular, the electric pulses, can be generated both by direct contact of the capacitor or its electrodes, respectively with the vegetable, fruit or part thereof, as well as by way of conductive fluids, wherein the vegetable, fruit or part thereof is totally or partially immersed into a conductive fluid. The capacitor may comprise at least two electrodes connected to a pulse generator. Different electrode shapes can be employed, for example, plate, ring, grid, hollow or flow-through electrodes, depending on, e.g. the sample to be conditioned by electroporation.

In one embodiment of the system, the conditioner may be an integral part of the sterilizer and/or digester. The sterilization chamber and/or the mashing chamber may provide the conditioning chamber of the conditioner. This is possible, for example, in that the capacitor of the conditioner is arranged for providing the electric field in the sterilization chamber and/or the mashing chamber. Using this system allows simultaneously performing the thermal processing steps, such as deactivating all deteriorating enzymes and/or thermally rupturing oil-bearing cells and at the same time, perform a conditioning, e.g. electroporating the cells of the fruit, vegetable or part thereof.

In one embodiment, the system comprises a (continuous) sterilizer for continuously thermally deactivating oil-deteriorating enzymes. This continuous sterilizer is preferably arranged downstream the conditioner and allows for a continuous milling process throughout, avoiding the disadvantages of batch sterilization that is state of the art. The continuous sterilizer may comprise an atmospheric pressure sterilization chamber. The atmospheric pressure sterilization chamber may comprise a heating medium at an atmospheric pressure, such as steam at a temperature of 60°C to 80°C.

Another aspect of the present invention relates to a sterilizer unit for the treatment of a vegetable, fruit or part thereof during the production of an oil from the vegetable, fruit or part thereof, in particular the production of an oil from palm oil fruits. Said sterilizer unit comprises a continuous sterilizer for continuously thermally deactivating oil-deteriorating enzymes having a sterilization chamber, a transportation device for continuously moving the vegetables, fruits or parts thereof through the sterilization chamber, as well as a conditioner having a conditioning chamber and at least one capacitor for generating an electric field in said conditioning chamber, wherein the conditioning chamber is arranged upstream or within the sterilization chamber.

In one embodiment of the sterilizer unit, the transportation device may transport the vegetable, fruit or part thereof through the conditioner, thus allowing a continuous conditioning. The transportation device preferably transports fruits or parts thereof into the sterilization chamber of the continuous sterilizer as well, i.e. the transportation device may extend through both the conditioner and the sterilizer.

In another embodiment, the sterilizer comprises an entry port for receiving the vegetables, fruits or parts thereof, moved by the transportation device as well as an exit port that is arranged, with respect to the transportation direction, in which the transport device moves the vegetables, fruits, or parts thereof through the sterilization chamber, opposite the entry port. The conditioner may be arranged between the entry and the exit port of the sterilization chamber. In one embodiment, the conditioner is arranged closer to the entry port than to the exit along the transportation direction. In a further embodiment, the conditioner is arranged adjacent to the entry port.

The conditioning by applying an electric field may not only replace at least partially a thermal processing step, thus reducing the energy consumption required for oil production, for example, in the step of deactivating oil-deteriorating enzymes or rupturing the oil-containing cells, and shortening the sterilization and/or digestion time. It was surprisingly found that unripe oil-containing fruits may be processed to oil by using the inventive method with a higher yield. More specifically, the conditioning of the invention allows for a premature processing of vegetables, fruits or parts thereof in a state of lower degree of ripeness than they would be usually processed. This may be of interest if ripe fruits or vegetables tend to metabolize byproducts that deteriorate the quality of the oil and/or reduce the yield thereof. The common processes for producing vegetable oil from vegetables, fruits or parts thereof in such premature or unripe state result in a low oil yield, offsetting the advantages of the high quality of oil that may be obtained from such an unripe samples. However, the conditioning, according to the present invention, allows for such an improvement of the oil processing and allows for an efficient production of high quality oil from the unripe oil-containing fruits with an economically acceptable yield. Processing unripe fruits or fruits of lesser ripeness, which becomes possible with conditioning by applying an electric as described in this application has another significant and surprising advantage. The lesser ripe the fruit, the lower the content of free fatty acids and partial glycerides. Such partial glycerides, particularly monoglycerides, are used and act as emulsifiers and thus increase the oil loss to the aqueous phase during the extraction in the process of oil production. Hence, the present invention also improves the extraction, reduces the water consumption and significantly improve the oil yield.

A traditional method to determine the ripeness of a fruit bunch is visually observe the color change during ripening and to count the number of fruits loose from the fresh fruit bunches. To count the number of lose fruits, a sample of e.g. 5 fruits bunch is dropped from a defined height, for example 2 meters to ground, and the average number of separated loose fruits per bunch is counted. If there are no lose fruits, the fruits are slightly underripe. There are also more advanced methods for the detection of the ripeness of fruit, as published e.g. in "Ripeness Detection Simulation of Oil Palm Fruit Bunches Using Laser-Based Imaging System" by Minarni Shiddiq et al. cited in AIP Conference Proceedings 1801, 050003 (2017).

It was surprisingly found that the step of applying an electric field to the vegetable, fruit or part thereof not only allow for at least a partial replacement of the thermal processing step, but also improves threshing, the separation of a part from the vegetable or fruit. Applying an electric field, for example, allows for an improved separation of fruits from bunches and/or for improved shelling of the fruit kernel. This may be advantageous in the production of an oil from a palm fruit by, for example, applying electric fields to fresh fruit bunches, thus improving the separation of the fruits from the bunches and/or improving the shelling of the palm fruit kernels. A palm fruit is a vegetable that is rich in cellulose and hemicellulose and has a fiber content. An effect of applying an electric field to such vegetable or fruit that is rich in cellulose and/or hemicellulose has not yet been demonstrated. Thus, the improved separation due the use of an electric field to is unexpected. Separation of the palm kernels from the shell in the palm oil mill gives rise to certain losses due the hardness of the shell. Due to the surprising softening of the shell by condition the fruit according to the present invention, the yield of kernels could be significantly increased.

According to another embodiment, the method may comprise the further step of washing the vegetables, fruits or parts thereof. The step of washing may be performed immediately before, immediately after, or simultaneously with the step of conditioning the vegetables, fruits or parts thereof by applying an electric field to the vegetables, fruits or thereof. The washing step removes dirt and other contaminants, which is beneficial, for example, in reducing the chloride contamination and the detrimental occurrence of 3-MCPD entering in palm oil. Combining the step of conditioning and washing is insofar advantageous as a washing medium may provide a conductive fluid between the electrodes of the capacitor.

In one embodiment, the washing step is a counter current washing step, in which the washing medium is moved in a direction opposite to the transport direction, in which the vegetables, fruits or parts thereof are moved by a transportation device. Countercurrent washing reduces the consumption of water. Further, the contamination degree, i.e. the amount of dirt and contaminants in the washing medium, increases in the washing direction, i.e. decreases in the transportation direction of the vegetables, fruits or parts thereof, allowing to condition the vegetables, fruits or parts thereof, further downstream the transportation direction. The fruits may thus be conditioned and the conditioner may be arranged closer to the subsequent process step/unit.

According to another embodiment, the conductivity of the washing medium may be measured and the composition and/or the flow rate of the washing medium may be adjusted subject to the determined conductivity of the medium. This way, the optimal conductivity of the washing medium at the capacitor of the conditioner, where the electric field is applied, can be set.

In a further embodiment, the washing medium may comprise process or waste water resulting from another stage during the process of producing the oil. This reduces the amount of fresh water required, improving the method ecologically and economically. In one embodiment, the conductivity of the waste water to be used as a washing medium is measured and the proportion of waste water in the washing medium is adjusted subject to the measured conductivity. This way, the conductivity of the washing medium may be controlled and set to the desired range and the maximum amount of waste water can be used as a washing medium.

Another aspect of the invention relates to a washing unit for treatment of the vegetable, fruit or part thereof during the production of an oil from the vegetable, fruit or part thereof, in particular the production of an oil from palm oil fruits. Said washing unit comprises a washing device for washing vegetables, fruits or parts thereof in a washing medium, flowing in a washing direction through the washing device, a conditioner having a conditioning chamber and at least one capacitor for generating an electric in said conditioning chamber, and a transportation device for moving the vegetables, fruits or parts thereof through the conditioning chamber in a transportation direction, wherein the transportation direction is opposite the washing direction. This washing unit allows for the combination of washing and conditioning in a counter current washing system.

The washing medium may be moved in the washing direction through the washing device by gravity. In this instance, the washing chamber may be arranged obliquely/tilted to gravity. In another embodiment, the washing unit further comprises a pump for moving the washing medium in the washing direction through the washing device.

The washing unit may comprise an inlet for introducing the washing medium into the washing device. Said inlet may be fluidly connected with a washing medium reservoir. This washing medium reservoir may be a waste water reservoir in which waste water resulting from a different stage of producing oil is stored.

The washing unit may further comprise a conductivity sensor for determining the conductivity of the washing medium. The conductivity sensor may be configured to transmit conductivity data to a control unit. Said control unit may furthermore be adapted to transmit washing data to the pump and/or the inlet, thus adjusting the flow rate of the washing medium and/or the proportion of waste water introduced into the washing device based on the conductivity data. Thus, the conductivity of the washing medium at the capacitor of the conditioner may be set to a desired value. In another embodiment, the control unit may be adapted to transmit conditioning data to the conditioner for adjusting the conditioning parameters subject to the conductivity data received in order to adjust the application of the electric field to the conductivity of the washing medium.

The conditioning embodiment may contain an oil recovery setup in case electric field induced oil release into the treatment medium occurs.

The oil production process may even be further improved in an embodiment, according to which at least one (additional) electroporation step of applying an electric field to the vegetable, fruit or part thereof at a different phase other than a thermal processing step during the process of producing oil is formed.

An electric field may be applied, for example, to a part of the palm tree, in particular a fresh fruit bunch, a palm fruit separated from the bunch, an empty bunch having its fruits substantially stripped off and/or the press cake or a fraction from the press cake. In addition to the conditioning for at least partially replacing a thermal processing step, the oil yield may even be further improved in that, for example, the empty fruit bunches, for which the fruits are stripped off, are electroporated. This may result in an improved yield of secondary oil recovered from the empty bunch press.

In a further embodiment, the press cake comprising the nut in the fiber residues or, after separation thereof, only the fiber residues or only the nuts may be electroporated, thus even further improving the oil yield by porating further oil-containing cells and making residue oil accessible in an easy way. Electroporation also improves the shelling of the nuts resulting in kernels, for example, in the production of palm kernel oil. In another embodiment, these kernels may be electroporated for improving the kernel oil production yield.

The system may comprise at least one electroporator in addition to the conditioner, said electroporator having an electroporation area for applying another electric field to the vegetable, fruit or part thereof. The electroporator may, for example, be arranged in the system for electroporating empty fruit bunches, the press cake, the fiber fraction from the press cake, the nut fraction from the press cake, or the fruit kernel.

In the following, an exemplary embodiment of the present invention is explained in greater detail with reference to the accompanying drawings and experimental work described below.

In the figures, the same reference numerals are used for elements that correspond to one another in terms of their function and special structure.

According to the description of the various aspects and embodiments, the elements shown in the drawings can be omitted if the technical effect of these elements are not needed for particular application and vice versa, i.e. elements that are not shown or described with reference to the figures, but are described above can be added if the technical effect of those particular elements is advantageous in a specific application.

In the figures:
- **Figure 1:**: shows a cross-sectional view of a palm oil fruit;
- **Figure 2:**: shows an overview of the palm oil production process known in the prior art;
- **Figure 3:**: shows an overview of a palm oil in an extraction process including the components of an exemplary system according to the present invention as well as incorporating an exemplary embodiment of a method for treatment according to the present invention;
- **Figure 4:**: is a schematic representation showing an example for the assignment of a conditioner to a sterilizer that can be used in an embodiment of a system according to an embodiment of the invention;
- **Figure 5:**: is a schematic representation of an example for the assignment of a conditioner to a digester that can be used in another embodiment of a system according to the present invention;
- **Figure 6:**: shows an overview of the exemplified protocol performed in the experimental work given below;
- **Figure 7:**: shows images of softening of the tissue and juice liquid of palm oil fruits treated by an electric field;
- **Figure 8:**: shows images of confocal laser scanning microscopy of the fresh tissue of palm oil according to the experimental work given below;
- **Figure 9:**: shows images of confocal laser scanning microscopy images of sterilized tissue samples according to the experimental work given below;
- **Figure 10:**: shows the disintegration index of cells in fresh palm oil fruits subject to the specific energy;
- **Figure 11:**: is a graph showing the separation of palm oil fruits from its bunches according to the experimental work given below;
- **Figure 12:**: is a graph showing the fruits remaining on the bunch after performing the separation according to the experimental work given below;
- **Figure 13:**: is a graph showing the pressed juice after the pressing of a control sample and samples treated according to the present invention, according to the experimental work given below;
- **Figure 14:**: is a graph showing the oil content after centrifugation in a control sample and samples treated according to the present invention in accordance with the examples given below;
- **Figure 15:**: is a schematic representation showing an example of a continuous sterilizer unit that can be used in an embodiment of a system according to the present invention, or represent an embodiment of the sub-system for such system; and
- **Figure 16:**: is a schematic representation showing an example of a washing unit that can be used in an embodiment of a system according to an embodiment of the invention, or represent an exemplary embodiment of the washing unit of the invention.

With reference to Figure 2, a known process of producing an oil 2 from a vegetable, fruit or part thereof 1 is shown. In the given example, the production of an oil 2 from a palm oil fruit 3 is described.

Fresh fruit bunches (4, FFB) are the harvested form of the palm oil fruits 3. Following an initial common processing, shown in Figure 2, the recovery of the palm oil and the palm kernel oil takes place along separate processing lines.

The process starts out in the plantation. The fresh fruit bunches 4 are harvested manually using a sickle attached to a long bar or pipe by estates workers. The FFB's ripeness and the way the fruit is handled will greatly affect the amount and quality of the oil 2 as well as the cost of operating the mill.

The oil content in the fruit increases rapidly in the late state of the ripening process. If the fruit is allowed to become overripe, the free fatty acid content will increase. Prior to the present invention, the fresh fruit bunches 4 must be harvested just as it becomes ripe to have lowest free fatty acid content.

Free fatty acids are formed by enzymatic degradation of the oil in the fruit. This a natural part of the ripening process. The rate of free fatty acid formation will increase rapidly if the fruit is mechanically damaged and enzymes normally not in contact with the oil in the fruit gets activated.

The first stage in the palm oil production is sterilization. In a sterilizer 5 the fresh fruit bunches 4 are treated with live steam 6. The purpose of this treatment is to thermally deactivate the enzymes responsible for the breakdown of oil into free fatty acid, to loosen the fruits 3 from the bunches and to coagulate the mucilage, so that oil of highest possible quality can be recovered.

Some oil is always lost to the sterilizer condensate 8. The amount of oil lost depends on the thermal intensity of the sterilization program used, in particular the temperature and the sterilization time. This oil can be recovered by skimming in the condensate pit, however such oil will be of inferior quality with a higher content of free fatty acids.

The sterilized bunches are continuously fed into a rotating drum threshing machine, called stripper 9, which strips and separates the palm oil fruits 3 from the bunches. The empty bunches 7 are usually sent to an empty bunch press (not shown) before being discharged for incineration in an incinerator 10 or sent back to the plantations for mulching 11. Recovered oil from empty bunch press will be classified as secondary oil and is segregated. It will be sold for use in non-food application, e.g., biofuel etc.

After stripping, the fruits 3 are continuously fed into a digester 12, e.g. a steam-jacketed digester which thermally ruptures the oil-bearing cell and turns the fruit 3 into a homogeneous mash ready for pressing in the press 13. The fruit mash in the digester 12 is heated by steam sparging and by indirect steam heating in the jacket.

The fruit mash from the digester 12 goes into a press 13, e.g. a screw press which squeezes the mash to produces a press liquor 14 consisting of a mixture of palm oil, solids and "fruit juice". This liquor 15 is diluted with fresh hot water and then sieved through a vibrating screen 15 into a settling tank 16.

The settled material from the settling tank 16 passed through a desander 17 and a centrifuge 18 to separate coarse materials such as fibers, debris and coarse sand, called separator sludge 19, from an oil fraction 20 that is returned to the settling tank 16.

The liquid from the settling tank 16 goes to the clarification process passing another centrifuge 21 and a vacuum dryer 22 to recover the crude palm oil 23.

The press cake 24 containing fibers 25 and nuts undergoes separate treatment. The nuts and fibers 25 are separated by a separator 26, e.g. a depericarper. The fibers 25 are stored in a silo and sent for incineration in a biomass boiler as fuel.

The nuts are also stored in silos for drying in a dryer 27 and then sent to a nutcracker (not shown) for cracking. The cracked mixture goes to a winnowing column 29 to separate dirt and light shells 30. Kernel 31 and broken shells 30 are then sent to a hydrocyclone 32 to further separate the broken shells 30 from the kernels 31. Broken shells 30 from cracked nuts are also sent for incineration in biomass boiler as fuel.

Separated palm kernels 31 are then dried in a kernel dryer 46 before they are transferred to a kernel crushing plant (not shown) where palm kernel oil is extracted by heating and pressing.

The diluted press liquor (also called the diluted crude oil) is pumped to a settling tank with retention time of up to 4 hours. The overflow from the settling tank containing clean crude palm oil is stored in a pure oil tank. The underflow still containing about 7% oil is stored in a sludge tank (not shown).

Crude palm oil 23 is produced by extraction of the oil from the palm oil fruits in plants known as "palm oil mills". Given the production volume it is clear that even an improvements of fractions of a percentage in the oil yield would have a very significant economic impact.

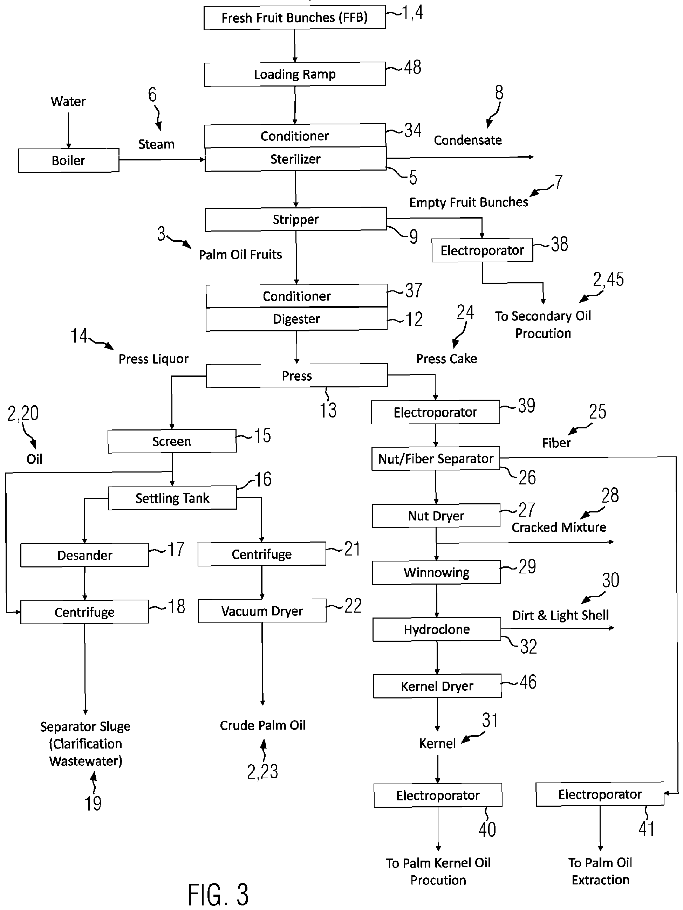

With reference to Figures 3 to 5, exemplary embodiments of the method and the system 33 for treating a vegetable, fruit or a part thereof 1 according to the present invention are further elucidated. The shown example is directed to producing oil from palm oil fruits 3. The exemplary embodiment of this invention is embedded in the context of a process of producing oil as shown in Figure 2.

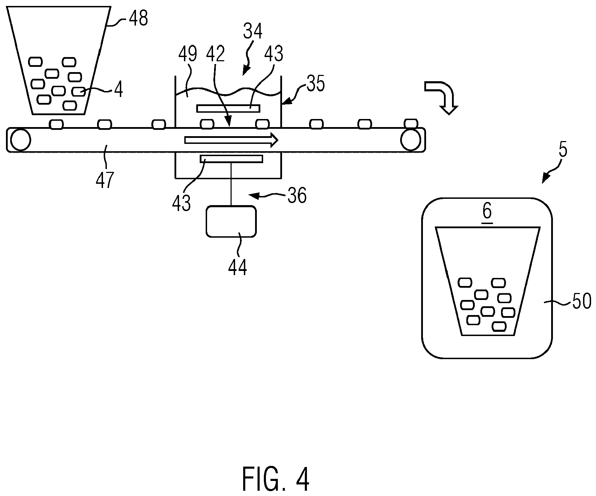

In the exemplary embodiment, a conditioner 34 for having a conditioning chamber 35 and at least one capacitor 36 for generating an electric field in said conditioning chamber 35 is assigned to the sterilizer 5. In this way, the thermal processing step of sterilizing, i.e. thermally deactivating oil-deteriorating enzymes, may be at least partially replaced by applying an electric field to the vegetable, fruit or part thereof 1, here the fresh fruit bunches 4. The conditioner 34 may be a processing unit arranged immediately up-stream of the sterilizer 5 (see Figure 4), such that the conditioned fresh fruit bunches 4 are transferred from the conditioner 34 to the sterilizer 5.

Figure 4 shows a schematic representation of an example for the assignment of the conditioner 34 to the sterilizer 5 that can be used in a system 33 of the invention. The fresh fruit bunches 4 are supplied to a transport device 47 via a loading ramp 48. The transport device 47 moves the fresh fruit bunches 4 in the transport direction indicated by the arrow through the conditioner. The conditioned fresh fruit bunches 4, to which an electric field was applied in an electroporation area 42 of the conditioner 34, are then transferred to the sterilizer 5. In the sterilization chamber 50, the conditioned fresh fruit bunches are treated with steam 6.

The conditioner 34 comprises the conditioning chamber 35, which is at least partially filled with a conductive fluid 49 that allows for an indirect contact with the fresh fruit bunches 4. The capacitor 36 comprises two electrodes 43 that are connected to a pulse generator 44, such as a Marx-generator. The area between the electrode 43 is the electroporation area 42 in which the electric field is formed and in which pulses of an electric field are applied to the fresh fruit bunches 4.

The conditioning by subjecting the fresh fruit bunches 4 to an electric field, for example, a pulsed electric field is firstly for partially replacing the thermal processing in the given example of the sterilization step. However, the conditioning, according to the present invention achieves additional surprising effects. It also improves the separation of the palm oil fruits 3 from the bunches in the stripper 9, as will be explained in the experimental examples given below.

In another aspect of the invention, the conditioning also serves the purpose of improving the oil yield and surprisingly allows for a premature processing of vegetables, fruits and parts thereof 1 in a state of lower degree of ripeness.

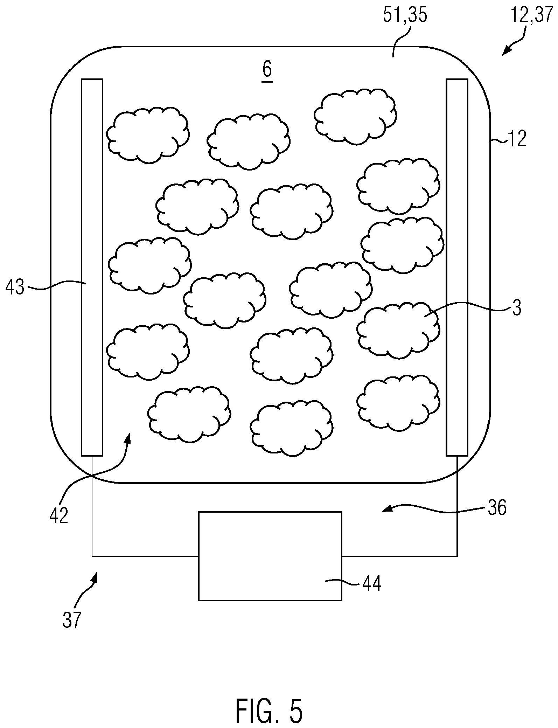

In the exemplary embodiment shown in Figure 3, a further conditioner 37 is assigned to the thermal processing performed in the digester 12. The further conditioner 37 may be arranged either immediately downstream the digester 12, so that the palm oil fruits 3, which were stripped from the bunches may be subjected to an electric field prior to entering the digester 12. Alternatively, the further conditioner 37 may be an integral part of the digester 12, as shown in Figure 5.

Figure 5 is a schematic representation of an example for the integral assignment of the further conditioner 37 to the digester 12 that can be used in another embodiment of the present invention.

In Figure 5, the conditioner 37 is an integral part of the digester 12. The mashing chamber 51 of the digester 12, which is filled with steam 6, is providing the conditioning chamber 35 of the further conditioner 37. The capacitor 36 of the further conditioner 37 is arranged for providing the electric field in the mashing chamber 51. To do so, the electrodes 43 are arranged at opposing sides of the mashing chamber 51, thus forming the electroporation area 42 inside the mashing chamber 51. Using such an integral assignment allows for simultaneously performing the thermal processing steps, in the shown example of Figure 5 thermally rupturing oil-bearing cells, and at the same time, perform a conditioning, e.g. electroporating the palm oil fruits 3.

The exemplary embodiment shown in Figure 3 comprises at least one additional electroporation step of applying an electric field to the vegetable, fruit or part thereof 1 at a different phase during the process of producing oil 1. The system shown in Figure 3 comprises four additional electroporators, a first electroporator 38, a second electroporator 39, a third electroporator 40 and a fourth electroporator 41. Each of said electroporators comprises an electroporation area 42. The electroporation area 42 is defined between electrodes of a capacitor 36 comprising electrodes 43 connected to a pulse generator 44, which is similar to the capacitor 36 described above for the conditioner 34 or 37 as shown in Figures 4 and 5.

The first electroporator 38 is assigned to the stripper 9 for applying an electric field to the emptied fruit bunches 7. This electroporator 38 allows further conditioning the emptied fruit bunches 7, thus improving the production of secondary oil 45 therefrom.

The second electroporator 39 is arranged between the press 13 and the nut/fiber separator 26 for applying an electric field to the press cake 24. The second electroporator 39 improves the yield of palm oil from the fibers 25 and the palm kernel oil from the kernels 31 separated from the nut/fiber separator 26. The second electroporator 39 furthermore improves the separation of the fiber 25 and the nut as well as the shelling of the nutshell 30 from the kernel 31.

The third electroporator 40 is arranged downstream the kernel dryer 46 for applying an electric field to the kernels 31. The third electroporator 40 improves the production and yield of palm kernel oil by applying an electric field to the kernels 31.

The fourth electroporator 41 is assigned to the nut/fiber separator 26 and used for an additional electroporation, i.e. applying pulses of an electric field to the fiber 25, leaving the nut/fiber separator. The fourth electroporator 41 improves the palm oil extraction from the fibers 25 and the overall yield in the oil production.

In Figure 3, four exemplary electroporators 38, 39, 40, 41 are shown. Of course, it is not necessary to use all of these electroporators. An arbitrary selection of these electroporators may be chosen depending on the specific application of the present invention.

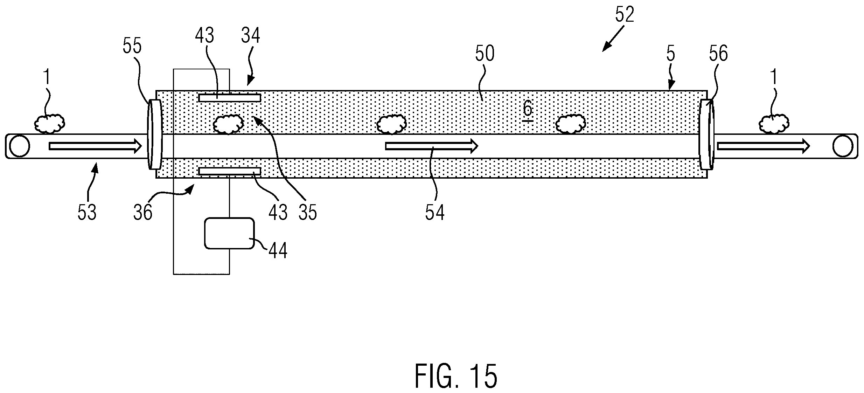

In the following, an exemplary embodiment of a continuous sterilizer unit 52 will be described with reference to Figure 15. The sterilizer unit 52 comprises a sterilizer 5 for continuously thermally deactivating all-deteriorating enzymes. The continuous sterilizer 5 comprises a sterilization chamber 50, a transportation device 53 for continuously moving the vegetable, fruit or part thereof 1 through the sterilization chamber 50 in a transportation direction 54, indicated by arrows in Figures 15. The sterilizer unit 52 further comprises a conditioner 34 having a conditioning chamber 35 and at least one capacitor 36. In the shown exemplary embodiment, the electrodes 43 of the capacitor 36 are connected with a pulse generator 44 and are arranged inside the sterilization chamber 50. Thus, the conditioning chamber 35 is part of the sterilization chamber 50; the conditioner, at least its electrodes, are arranged within the sterilization chamber.

The sterilization chamber 50 is filled with steam 6 (indicated by dots), having atmospheric pressure and a temperature of about 60°C to 80°C. Thus, the vegetable, fruit or part thereof 1, transported by the transportation device 53 through the sterilization chamber 50 is conditioned by application of an electric field between the electrodes 43 and continuously sterilized in the steam 6.

The sterilizer 5 comprises an entry port 55 and exit port 56. The fruits 1 enter the sterilization chamber 50 through the entry port 55 and leave the sterilization chamber 50 through the exit port 56 at the other end of the sterilization chamber 50. In transportation direction 54, the exit port 56 is arranged opposite the entry port 55. The entry port 55 and/or the exit port 56 may comprise valves, e.g. rotary valves, flap valves or gate valves, to minimize the loss of steam 6 from the sterilization chamber 50. Alternatively, the entry port 55 and/or the exit port 56 may comprise a water bath such as a heatable water bath that allows for preheating the fruits 1 as well as sealing the ports 55, 56.

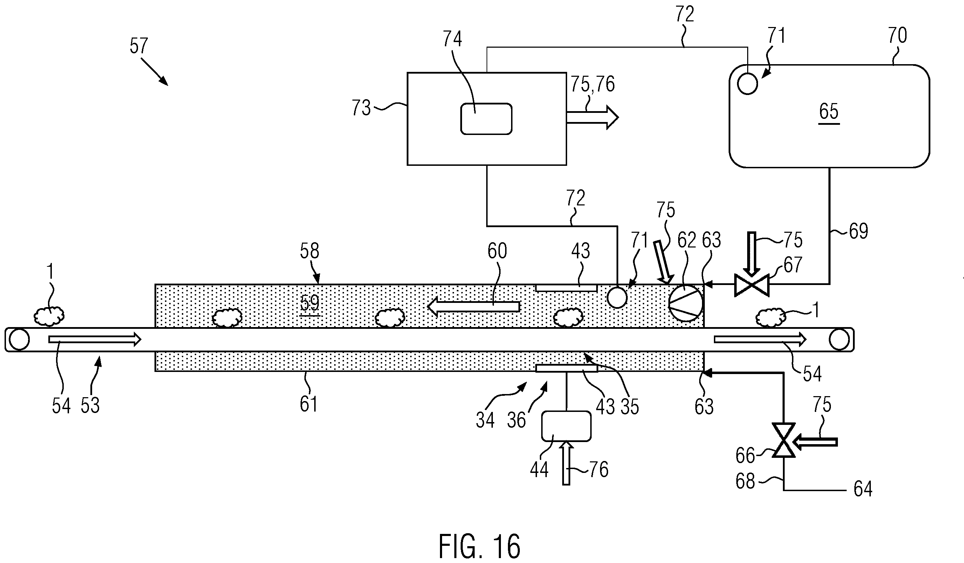

In the following, an exemplary embodiment of a washing unit 57 according to the present invention is described by reference to Figure 16. This washing unit could, for example, be arranged between the loading ramp at the sterilizer 5 in Figure 2, or it could be arranged between the loading ramp 48 and the conditioner 34 of Figure 3.

The washing unit 57 comprises a washing device 58 for washing the vegetables, fruits or parts thereof 1 in a washing medium 59 (indicated by dots in Figure 16). The washing medium 59 moves in a washing direction 60 through a washing chamber 61 of the washing device 58.

The washing unit 57 furthermore comprises a conditioner 34 having a conditioning chamber 35 and at least one capacitor 36 for generating an electric field in said conditioning chamber 35. The capacitor 36 comprises electrodes 43 connected to a pulse generator 44. The electric field is built between the electrodes 43, so the area between the electrodes 43 constitutes the conditioning chamber 35.

The washing unit 57 furthermore comprises a transportation device 53 for moving the vegetables, fruits or parts thereof 1 through the washing chamber and the conditioning chamber 35 in a transportation direction 54. The transportation direction 54 is opposite the washing direction 60, i.e. the washing device 58 operates in countercurrent mode, wherein the vegetable, fruit or part thereof 1 to be washed is moved in a transportation direction 54 that is counter to, i.e. opposite the washing direction 60, in which the washing medium 59 is moved.

The washing unit 57 shown in Figure 16 allows for the combination of washing and conditioning. The electrodes 43 of the capacitor 36 are arranged inside the washing chamber 61 and the transportation device 53 passes between the electrodes 43, i.e. through the conditioning chamber 35 that is within the washing chamber 61.

In the embodiment shown in Figure 16, the washing unit 57 comprises a pump 62 for moving the washing medium 59 in the washing direction 60 through the washing chamber 61.

The washing device 58 comprises an inlet 63 for introducing washing medium 59 into the washing chamber 61. The embodiment shown in Figure 16 comprises two inlets 63. One inlet 63 allows introduction of fresh water 64 as washing medium 59. The other inlet 63 allows introduction of waste water 65 as washing medium 59 into the washing chamber 61. The washing medium 59 may comprise from 0 % to 100 % waste water 65, depending on the conductivity of the waste water 65, which will be explained in more detail below. To adjust the desired proportion of water water 65 in the washing medium 59, a fresh water valve 66 as well as a waste water valve 67 are arranged in the fresh water conduit 68 and the waste water conduit 69, respectively, that leads to and opens into the inlet 63.

The waste water 65 may be fed into the waste water conduit 69 from a waste water reservoir 70, such as a waste water pond in palm oil production plant.

The washing unit 57 may furthermore comprise at least one conductivity sensor 71. In the shown embodiment of Figure 16, one conductivity sensor 71 is arranged inside the waste water reservoir 70 for measuring the conductivity of the waste water 65 in the waste water reservoir 70. A further conductivity sensor 71 is arranged inside the washing chamber 61 for measuring the conductivity of the washing medium 59 inside the washing chamber 61. The conductivity sensor 71 inside the washing chamber 61 is arranged in washing direction 60 immediately before the conditioning chamber 35 of the conditioner 34. This conductivity sensor 71 could of course also be arranged for example within the conditioning chamber 35.

The conductivity sensors 71 measure the conductivity of the washing medium 59 and/or the waste water 65 and are adapted to transmit conductivity data via a conductivity data line 72 to a control unit 73. The control unit 73 may comprise a controller 74 receiving the conductivity data and generating washing data 75 and/or conditioning data 76 subject to the conductivity data received.

The washing data 75 and/or the conditioning data 76 may be generated, e.g. based on a table assigning a defined washing value/conditioning value to a defined conductivity value of the conductivity data. The controller 74 may likewise comprise an algorithm or use artificial intelligence for outputting the washing data 75 and/or conditioning data 76 based on the conductivity data received. The control unit 73 is adapted for outputting and transferring the washing data 75 and/or conditioning data 76. The washing data 75 may for example be sent from the control unit 73 to the pump 62 for adjusting the flow rate of the washing medium 59 in the washing chamber 61. The washing data 75 may additionally or alternatively be sent to the fresh water valve 66 and/or the waste water valve 67 for adjusting the proportion of the waste water 65 in the washing medium 59 in order to adjust the conductivity of the washing medium 59 inside the conditioning chamber 35 to a desired value set for optimum conditioning conditions.

In the exemplary embodiment shown in Figure 16, the conductivity sensors 71 are connected to the control unit 73 via conductivity data line 72. Such data line 72 could be cables. It would of course also be possible to use cableless transmission. The conductivity data could for example be transferred from the conductivity sensor 71 to the control unit by wireless communication such as radio, free-space optical communications including Wifi and IR or the like. Such wireless transmission is shown and indicated in the exemplary embodiment of Figure 16 for the transmission of the washing data 75 and the conditioning data 76 by arrows.

For example, the conditioning data 76 are wirelessly transmitted from the control unit 73 to the pulse generator 44. The pulse generator 44 receives the conditioning data 76 and the conditioning data 76 adjusts the conditioning parameters to the conditioning data 76 received by the control unit 73. The conditioning parameters may for example be the frequency of electric pulses, the length of an electric pulse, the strength of the electric field or the velocity, with the fruit 1 is transported by the transportation device 53 in transportation direction 54. This transportation velocity determines the residence time of the fruit 1 within the conditioning chamber 35, i.e. the period of time a fruit 1 is inside the conditioning chamber 35 and exposed to an electric field.

In the following, experimental trials demonstrating that the advantages of the present invention will be presented.

**REFERENCE NUMERALS**

| | | | |
|---|---|---|---|
| 1 | Vegetable, fruit, part thereof | 33 | System |
| 2 | Oil | 34 | Conditioner |
| 3 | Palm oil fruit | 35 | Conditioning chamber |
| 4 | Fresh fruit bunches | 36 | Capacitor |
| 5 | Sterilizer | 37 | Further conditioner |
| 6 | Steam | 38 | First electroporator |
| 7 | Empty fruit bunches | 39 | Second electroporator |
| 8 | Sterilizer condensate | 40 | Third electroporator |
| 9 | Stripper | 41 | Fourth electroporator |
| 10 | Incinerator | 42 | Electroporation area |
| 11 | Mulching | 43 | Electrodes |
| 12 | Digester | 44 | Pulse generator |
| 13 | Press | 45 | Secondary oil |
| 14 | Press liquor | 46 | Kernel dryer |
| 15 | Screen | 47 | Transport device |
| 16 | Settling tank | 48 | Loading ramp |
| 17 | Desander | 49 | Conductive fluid |
| 18 | Centrifuge | 50 | Sterilization chamber |
| 19 | Separator sludge | 51 | Mashing chamber |
| 20 | Oil fraction | 52 | Sterilizer unit |
| 21 | Centrifuge | 53 | Transportation device |
| 22 | Vacuum dryer | 54 | Transportation direction |
| 23 | Crude palm oil | 55 | Entry port |
| 24 | Press cake | 56 | Exit port |
| 25 | Fiber | 57 | Washing unit |
| 26 | Separator | 58 | Washing device |
| 27 | Nut dryer | 59 | Washing medium |
| 28 | Cracked nut mixture | 60 | Washing direction |
| 29 | Nut shells | 61 | Washing chamber |
| 30 | Shell | 62 | Pump |
| 31 | Kernel | 63 | Inlet |
| 32 | Hydroclone | 64 | Fresh water |
| 65 | Waste water | 71 | Conductivity sensor |
| 66 | Fresh water valve | 72 | Conductivity data line |
| 67 | Waste water valve | 73 | Control unit |
| 68 | Fresh water conduit | 74 | Controller |
| 69 | Waste water conduit | 75 | Washing data |
| 70 | Waste water reservoir | 76 | Conditioning data |

### EXPERIMENTAL WORK

### 1. Trial plan

Fresh and steamed palm fruit samples as well as whole bunches were received for the experiments. After an initial preparation such as cleaning, sterilization, and separation from the bunch (when needed), the samples were packed in vacuum and stored at 4°C. The analyses were mainly focused on:
- Conductivity of the material, measured by applying an electric field and detecting resulting current flow;
- Tissue structure modification (loosening from the kernel, Confocal Laser Scanning Microscopy CLSM);
- Separation from the bunches;
- Oil yield.

**Table 1: Phases of the experiments**

| **Phase** | **Description** | **Main goal of trials** |
|---|---|---|
| ***Fruit delivery*** | Fresh and industrially sterilized fruits | Initial observation of the product characteristics, oil yield, tissue structure modification. |
| ***Bunch delivery*** | Bunches of different sizes and levels of ripeness | Fruit separation from bunch, oil yield at lower field strengths, reduction of sterilization time, tissue structure modification. |

### PEF treatment

Field strengths of varying between 0.8 and 2.3 kV/cm and energy inputs of 2, 5, 10 and 20 kJ/kg were tested. Due to the size of the bunches and PEF pilot limitations, the maximum field strength applied to the whole bunches was 1.07 kV/cm.

The samples were:
- *Steamed*/*sterilized (fruits) sample:* conditioning by PEF after industrial sterilization with a field strength of 2.3 kV/cm and a specific energy input of 5 kJ/kg (PEF5), 10 kJ/kg (PEF10), and 20 kJ/kg (PEF20);
- *Fresh (fruits) sample:* conditioning by PEF before sterilization with a field strength of 2.3 kV/cm and a specific energy input of 5 kJ/kg (PEF5), 10 kJ/kg (PEF10), and 20 kJ/kg (PEF20); and
- *Bunches:* conditioning by PEF before sterilization with a field strength of 0.8 kV/cm or 1.07 kV/cm and a specific energy input of 5 kJ/kg (PEF5), 10 kJ/kg (PEF10), and 20 kJ/kg (PEF20).

### Tissue

Considering the size of the fruits and hardness of the kernels, the softening of the tissue was observed visually and manually, by means of separating the flesh and kernel parts of PEF-treated and untreated fruits right after treatment. For a more detailed view, confocal laser scanning microscopy (CLSM) was performed for fresh and sterilized samples.

### Conductivity of the material

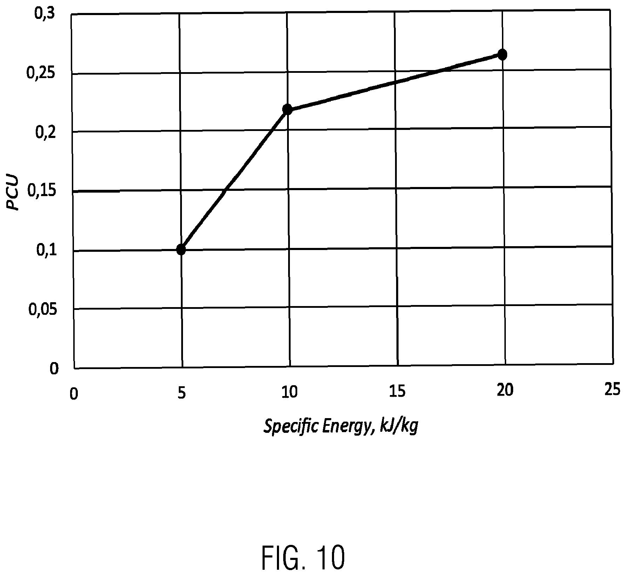

The data for the conductivity calculation was obtained by treating, both the *fresh* fruit already separated from the fruit bunch and the *whole* fruit, i.e the fresh fruit bunches with the fruits on fruit bunches harvested/cut from the palm tree, at a voltage of 4 kV in a 2x2 cm cell (see Table 2 below and Fig. 10). A voltage of 8 kV was applied and the current measured to calculate product conductivity under pulsed power conditions. Additionally, the cell disintegration index as previously described by Knorr and Angersbach in "Impact of high intensity electric field pulses on plant membrane permeabilization" (Trends in Food Science & Technology, Volume 9, Issue 5, 1998, pages 185-191) was measured by impedance analysis making use of Elea's PEF Control device with a measurement frequency from kHz to Mhz range.

### Separation from the bunches

The stripping efficiency of the oil palm fruits was carried out by the dropping method. The sterilized palm fruit bunch dropped at a height of 2 m. The detached fruits were collected and counted. The amount of fruits that separated from the bunch was counted in 6 different points: Before dropping (amount detached during sterilization); 1^{st}, 2^{nd}, 3^{rd}, 4^{th} drop and the amount of fruits remaining in the bunch (rest).

### Oil yield

The oil yield was determined by means of screw pressing and centrifugation. In order to approximate the lab analysis to the industry, the protocol followed steps of sterilization, digestion, pressing and centrifugation. For fresh samples, the sterilization was done in the laboratory autoclave (at a pressure of 2 bar for 90, 45 or 20 min). The digestion step was added prior to pressing by mixing the samples disposed in a container, placing it in a water bath (90°C) for 8 min. Screw pressing was done with a screw press with a capacity of 5 kg/h (IBG Monforts GmbH & Co., Komet, type CA 59 G, Germany). The nozzle head used had a bore of 6 mm and was heated to 110 °C before pressing. The heating system of the press was turned on 2 minutes before the feeding of product for all trials. The press was allowed to cool down and thoroughly cleaned after each trial. Centrifugation was done with a Heraeus Megafuge 40R (Thermo Scientific) for 5 min at 3000g. An amount of pressed juice was taken directly from the press, placed into 15 ml Falcon tubes and put into the centrifuge in order to avoid big drops in temperature. The total oil extraction was estimated by the percentage of oil phase separated after the centrifugation. For fresh samples, PEF was applied before the sterilization step. For steamed samples, the treatment was done before the digestion step.

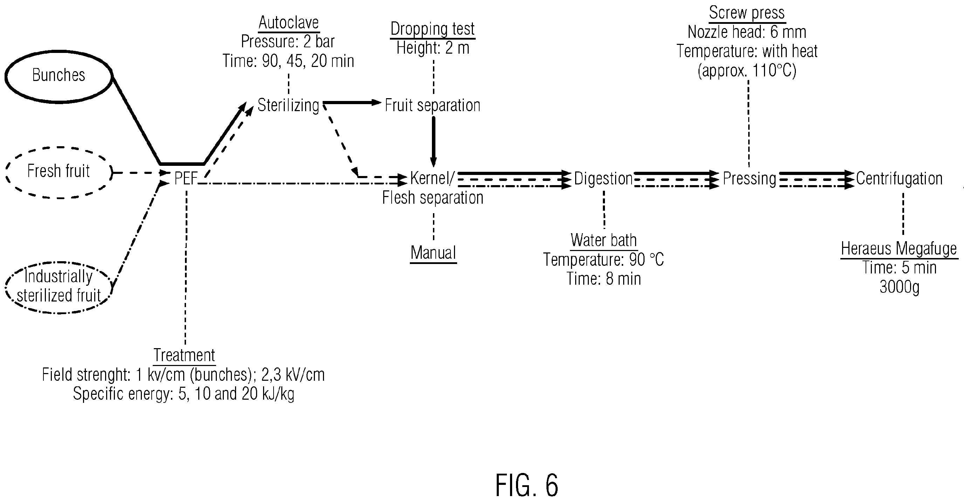

An exemplification of the protocol can be seen in the Figure 6.

### 2. Results

### Tissue properties

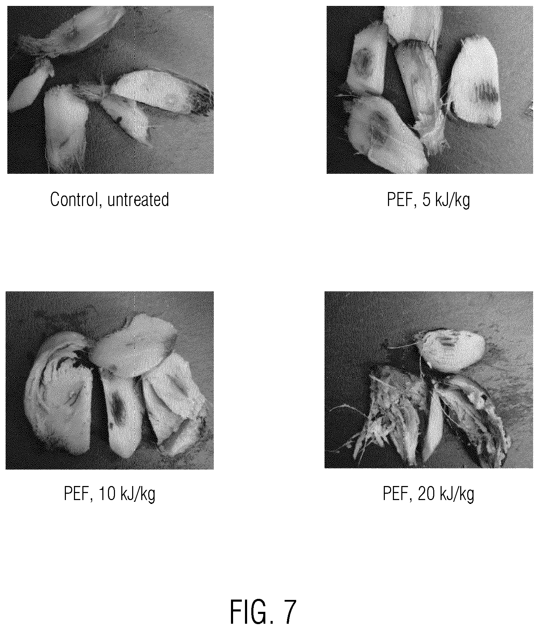

After PEF treating the fruits a textural change and softening of the fruit was observed and surprisingly also the separation of flesh and the kernel of fresh PEF-treated samples at room temperature (22 °C) became easier. This difference increased with increasing energy input. In this set of experiments, the samples were treated with a field strength of 2.3 kV/cm and specific energy inputs of 5, 10 and 20 kJ/kg. While PEF 5 showed only slight differences while cutting the flesh, 20 kJ/kg allowed an easy manual separation of the flesh and kernel. It was also possible to see more juice leaking from the tissue when higher PEF intensities were applied (Fig 7).

### CLSM analysis

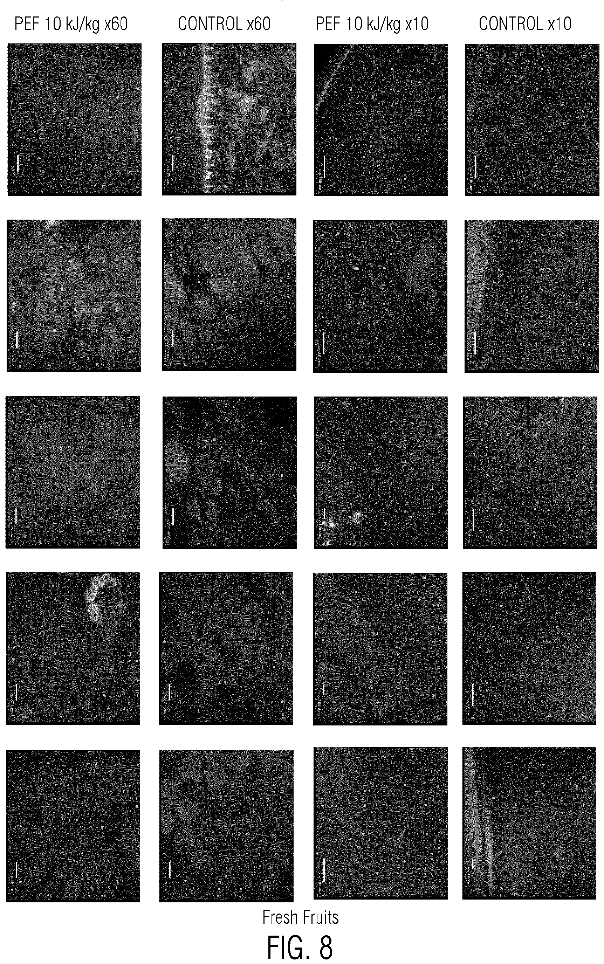

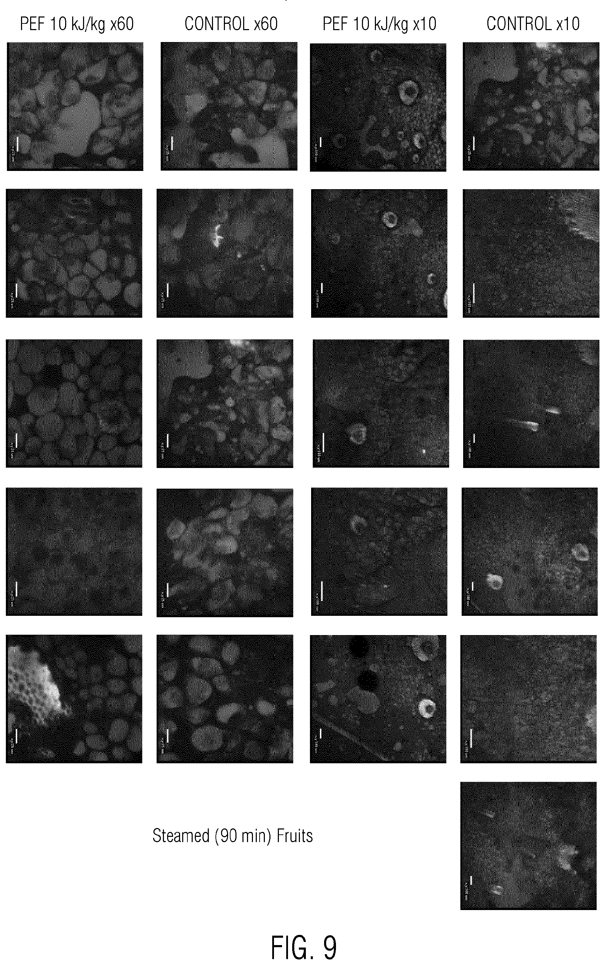

A confocal laser scanning microscopy (CLSM) was performed to evaluate PEF impact on tissue structure for fruits treated with different electric field strength and specific energy input. The analysis of Control and PEF-treated (10kJ/kg - 1kV/cm) palm fruits in their fresh and sterilized form has shown a fat release induced by PEF treatment. Surprisingly the fat release and amount of extracellular fat has been increased by PEF for fresh as well as thermally processed samples. (shown in red color, not enclosed by a cellular structure in Figures 8 and 9) in comparison to Control, where the fat is mostly shown inside the cells. For both fresh and even more so also sterilized samples that effect has been observed.

### Conductivity of the material

**Table 2: Conductivity data**

| **Group** | **Samples** | **Distance b/w electrodes (cm)** | **Treated material (g)** | **Voltage (V)** | **Frequency (Hz)** | **Pulse width (µs)** | **Number of pulses** | **Peak current (A)** | **Max pulse peak current (A)** | **Max pulse peak voltage (V)** |
|---|---|---|---|---|---|---|---|---|---|---|
| *Whole fruit* | Steamed | 2 | 16 g (total): 9.6 (fruit) 6.4 (water) | 4000 | 15 | 8 | 180 | 7.5 - 8.2* | 8.2 | 3800 |
| | Fresh | 2 | 16 g (total): 9 g (fruit) 7 g (water) | 4000 | 15 | 8 | 180 | 10.3 -11* | 11 | 3800 |
| *Flesh* | Steamed | 2 | 21.5 g (flesh) | 4000 | 15 | 8 | 200 | 5.6 - 6.1* | 6.1 | 3800 |
| | Fresh | 2 | 21.5 g (flesh) | 4000 | 15 | 8 | 200 | 16.9 - 17.8* | 17.8 | 3800 |

| | | | | | | | | | | |
|---|---|---|---|---|---|---|---|---|---|---|
| * variation of peak current observed during the treatment | | | | | | | | | | |

The conductivity has been measured for two purposes. Conductivity data under pulsed power conditions is useful a parameter for design of industrial scale processing equipment to predict pulsed power supply requirements. The results have shown that current pulse generator designs with peak current capacities of several kA can be applied for the suggested process. In addition, frequency dependent conductivity, so called impedance has been analysed. Fresh fruits treated with different specific energy inputs and the field strength of 1kV/cm have shown average cell disintegration indices varying between 0.1 and 0.26 (Fig. 10), indicating successful electroporation even for material with high fibre and oil content. The increase in energy input was correlated with an increase in the cell disintegration index.

### Separation from the bunches

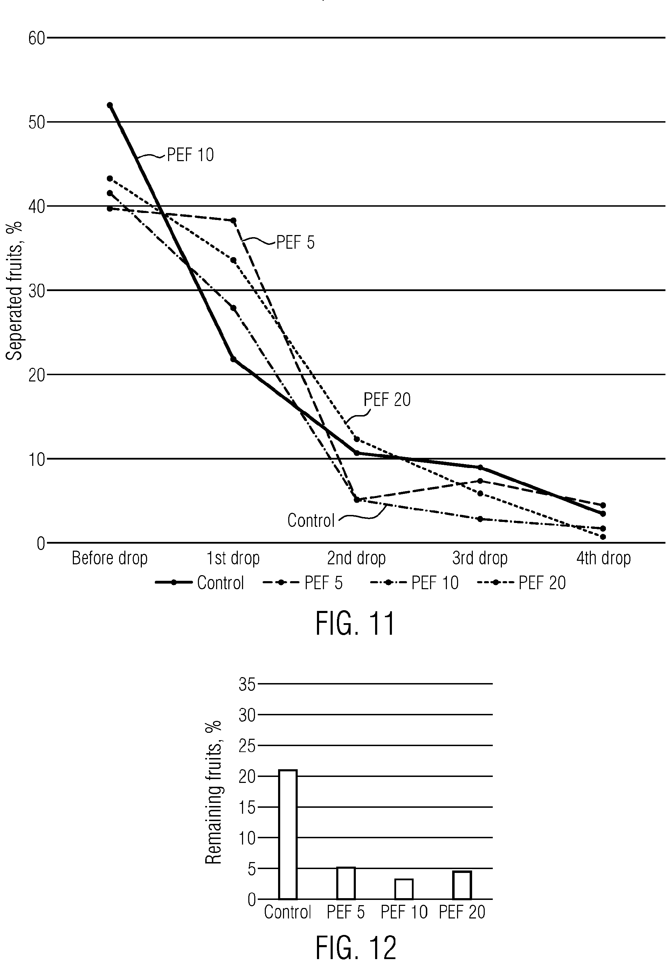

After PEF treating fruit bunches the potential for easier separation became obvious, as surprisingly some fruits have fallen of after mechanical impact during handling the product. A drop test has confirmed that observation of a better separation after PEF treatment. PEF-treated bunches have shown to lose more fruits before the droppings or in the first drops. Nonetheless, there were many differences between the cut bunch samples such as natural ramifications, size and location of the cut (top or bottom), which in addition to maturity might explain variation in results, especially regarding to the amount of fruits left in the bunch after 4 drops. PEF-treated bunches with many ramifications tended to have more fruits of difficult removal. The improved separation according to the invention is shown in Figures 11 and 12.

### Oil Yield

### Pressed Juice:

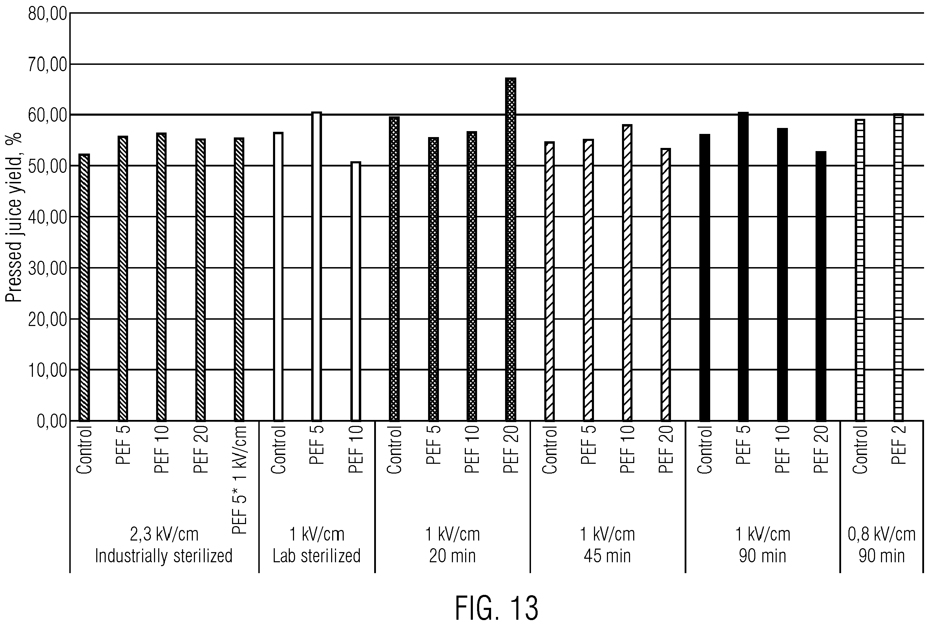

Fig 13 shows the pressed juice yield after screw pressing of control and PEF-treated samples.

### Trials on fresh and sterilized fruit:

An increase of the pressed juice yield in the range of 3% to 4 % was observed for industrially sterilized samples, which indicates that the heat load applied does not result in full permeabilization and surprisingly a PEF treatment has been causing further oil release. For lab sterilized PEF-treated samples, where obviously a higher thermal load has been achieved there is a decrease in juice yield when applying an energy input of 10 kJ/kg. Increase in field strength at the same specific energy (5 kJ/kg) showed similar results in juice yield.

### Trials on bunches:

The impact level of field strength has been investigated during this trial phase. Overall, also a low field strength has shown to result in an oil yield increase, even at reduced sterilization times. Except for the 20 min sterilization time samples, a slight decrease in pressed juice yield can be observed when applying high specific energy inputs (PEF 20), which indicates a too high extent of tissue softening. Higher energy inputs tend to give more yield event when the sterilization times are reduced, with PEF 20 giving the best results for 20 min sterilization, PEF 10 for 45 min sterilization and PEF 5 for 90 min sterilization (Figs. 13). Reducing the field strength to 0.8 kV/cm and specific energy input to 2 kJ/kg still showed a 1% increase in oil yield when compared to the control of the same delivery date/bunch, but an overall high pressed juice yield (60.12%) when compared to previous trials. The increase in pressed juice yield after PEF-treatment varied between 0.5% and 7.6 % when compared to control samples, with a decrease of approx. 3% and 4% for PEF 5 and PEF 10 at the sterilization time of 20 min, and of 4.2% for PEF 20 at the sterilization time of 90 min.

### Oil separation after centrifugation:

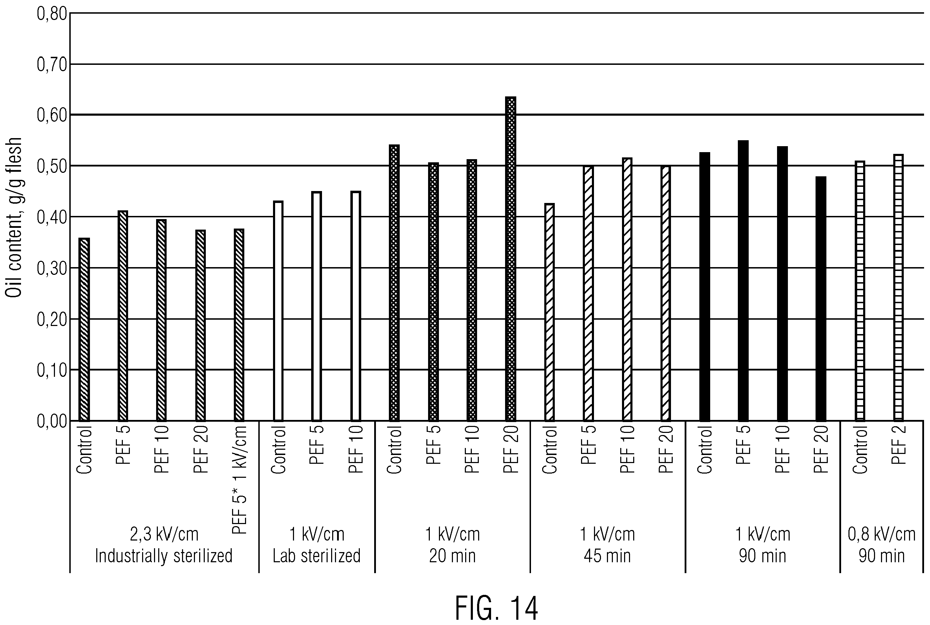

Figure 14 presents the content of oil (g/g of flesh) after the centrifugation.

### Trials on fresh and sterilized fruit:

For industrially sterilized samples PEF-treatment resulted in an average increase in the total oil extracted, with the best results being achieved at the specific energy of 5 kJ/kg. There is a decreasing trend in the extracted oil when applying an energy inputs of 10 kJ/kg or higher. Meanwhile, for lab sterilized samples, the negative trend of increasing energy on oil extraction was not evident. This suggests that the ideal energy input and field strength may vary depending on the position of the PEF-treatment within the process line (before or after sterilization). In these trials, a positive correlation between the increase in field strength (1 kV/cm to 2 kV/cm) and the increase in oil extraction for samples with the same specific energy (5 kJ/kg) was observed.

### Trials on bunches:

Higher energy inputs tended to give more oil yield when the sterilization times are reduced, with a negative trend in the oil content when higher energy inputs (PEF 20) are applied after 45 minutes or more of sterilization (Fig. 14). The increase in oil extraction after centrifugation varied between 1 and 9% after PEF-treatment. A decrease in oil extraction could be observed for PEF 5 and 10 (20 min sterilization) and PEF 20 (90 min sterilization). Overall, the oil yield of both untreated (NT) and PEF-treated samples increased for bunches, where the whole fresh bunches were sterilized in the laboratory and a field strength of 1 kV/cm was applied.

The percentage of pressed juice extraction was not always positively related to higher oil separation by centrifugation. This can be seen by the lower values of oil content (g/g of flesh). The amount of sediments between the samples varied. The flow of the product during screw pressing was better for the fruits of the lab sterilized bunches. This can be seen by less differences between pressed juice yield and oil content for this group.

### Conclusions of experimental work

- After PEF treatment an increase in softness of the tissue could be observed visually and manually. CLSM images surprisingly have shown an increasing extent of extracellular fat agglomerations even in comparison to sterilized samples. This shows a significant potential to improve oil production, and to replace or reduce thermal processing and reduce e.g. the energy consumption for separating, cutting and/or pressing the vegetable of fruit or part thereof.
- PEF-treatment has shown to result in higher yield for both industrially and lab sterilized samples in comparison to control, surprisingly it has been found that the sterilization currently applied does not fully release the oil.
- Lower field strengths (1 kV/cm) unexpectedly gave excellent results for oil extraction, whereas further increase of field strength showed a too high extent of softening and caused poor separation. There seems to be a correlation between reduction in sterilization time and the need for higher specific energy inputs. This correlation can be used to reduce the consumption of energy and other resources and thus increase the economic value of the oil production process.
- Surprisingly a better separation of the fruits from the bunches after PEF-treatment was observed, an effect typically occurring for mature products only. A better separation of the fruits and of less mature fruits from the bundles improves the oil production process, e.g. the stripping step and improves raw material usability.

## Claims

1. Method for treating a vegetable, fruit or a part thereof (1) during a process of producing an oil (2) from the vegetable, fruit or parts thereof (1), in particular of producing an oil (2) from palm oil fruits (3), said method comprising the steps of:
- at least partially replacing a thermal processing step in the process of producing the oil (2) with a step of conditioning the vegetable, fruit or part thereof (1) by applying an electric field to the vegetable, fruit or part thereof (1); and
- pressing the conditioned vegetable, fruit or part thereof (1) for obtaining a press liquor (14) and a press cake (24).

2. Method of claim 1, wherein the vegetable, fruit or parts thereof (1) is conditioned before or during the thermal processing step of deactivating oil-deteriorating enzymes and/or before or during the thermal processing step of rupturing the oil-bearing cells.

3. Method of claim 1 or 2, wherein the conditioning at least partially reduces the duration of the thermal processing step by more than 20%, more than 30%, more than 40%, more than 50%, more than 60%, more than 70%, more than 80% or more than 90%.

4. Method of claim 2 or 3, wherein the conditioning replaces the step of thermally deactivating oil-deteriorating enzymes and/or thermally rupturing the oil-bearing cells.

5. Method according to any one of claims 1 to 4, wherein an energy input of at least 1 kJ/kg, preferably from 5 to 30 kJ/kg is applied by the electric field.

6. Method according to any one of claims 1 to 5, wherein an electric field of 0.5 kV/cm to 3 kV/cm is applied.

7. Method according to any one of claims 1 to 6, wherein at least 10 electric pulses, preferably 10 to 200 electric pulses, more preferably 30 to 50 electric pulses are applied as the electrical field.

8. Method of claim 4, wherein the conditioning at least partially replaces the step of thermally deactivating oil-deteriorating enzymes, wherein the product value obtained by multiplying the energy input of conditioning a kJ/kg with a duration of thermal deactivation in minutes is 350 to 500.

9. Method of any one of claims 1 to 8, comprising at least one electroporation step of applying an electric field to the vegetable, fruit or part thereof (1) at a different phase during the process of producing oil.

10. Method of any one of claims 1 to 9, wherein an electric field is applied to a part of a palm tree, in particular a fresh fruit bunch (4), a palm fruit (3) separated from the bunch, an empty bunch (7) having its fruits substantially stripped off, and/or the press cake (24) or a fraction from the press cake (24).

11. Method of any one of claims 1 to 10, wherein unripe oil-containing fruits are processed to oil.

12. System (33) for the treatment of a vegetable, fruit or part thereof (1) during the production of an oil (2) from the vegetable, fruit or part thereof (1), in particular the production of an oil (2) from palm oil fruits (3), said system (33) comprising:
- a conditioner (34, 37) having a conditioning chamber (35) and at least one capacitor (36) for generating an electric field in said conditioning chamber (35);
- a sterilizer (5) for thermally deactivating oil-deteriorating enzymes having a sterilization chamber (50) and/or a digester (12) for thermally rupturing oil-bearing cells in the vegetable, fruit or part thereof having a mashing chamber (51); and
- at least one press (13) arranged downstream the conditioner (34, 37) for squeezing the conditioned vegetable, fruit or part thereof and obtaining a press liquor (14) and a press cake (24).

13. System (33) according to claim 12, wherein the capacitor (36) comprises at least two electrodes (43) connected to a pulse generator (44).

14. System (33) according to claim 12 or 13, wherein the conditioner (34, 37) is an integral part of the sterilizer (5) and/or digester (12).

15. System (33) according to any one of claims 12 to 14, comprising at least one electroporator (38, 39, 40, 41) having an electroporation area (42) for applying another electric field to the vegetable, fruit or part thereof (1).
